# EUROPEAN PATENT APPLICATION

(11) **EP 4 757 277 A2**
(43) Date of publication of application: **10.06.2026**
(21) Application number: 26150312.2
(22) Date of filing: 22.11.2023
(51) Int. Cl.: H04L 51/214

(54) **METHOD AND SYSTEM FOR DISTRIBUTING VOICE MESSAGES**

(30) Priority: 23.11.2022 CH 14002022
(62) Divisional of application: 23020515.5
(71) Applicant: HushTalks AG, 6300 Zug (CH)
(72) Inventor: Poya, Navid, 5610 Wohlen (CH)
(74) Representative: Körner, Thomas Ottmar

(57) **Abstract**

A system for distributing voice messages, comprising
a) a plurality of computing devices connectable over a network, in particular the internet, comprising
i) a plurality of client devices;
ii) a central computing platform, in particular a server and/or a host;

b) the central computing platform is configured to
i) store user data related to each of plurality of users, each user identified by a unique user ID, in particular with said user ID contained in the user data; wherein
(1) for at least some users, the user data comprises content preference information related to a voice message content;

ii) store a plurality of voice messages, wherein
(1) each voice message has been created by a, in particular one, user;

iii) store metadata related to and/or associated with each voice message, said metadata comprising
(1) the user ID of said user;
(2) a content identifier identifying and/or classifying a content of said voice message;
(3) a language identifier identifying a language of the message;

iv) select a subset of users based on content preference information;
v) distribute voice messages to the subset of users; characterized in that
vi) the voice message is anonymized prior to being distributed.

## Description

### FIELD OF THE INVENTION

The invention pertains to the field of social media platforms. In particular, it relates to a method and system for distributing voice messages.

### BACKGROUND OF THE INVENTION

Social Networks have made huge changes in our lives. We are in the truest sense of the word modern slaves who consciously or unconsciously idolize their rulers (operators of social media). The question, however, is whether this was the purpose of our progress in media sciences and technology. These days, vast numbers of individuals invest a lot of time every day in Instagram^{™}, Facebook^{™} and other well-known social media. What is invested in the end, however, is not people's time, but their life. And what suffers most from it, is true contact between individuals.

But how should one seek real contact with individuals if one constantly shows the other individuals a facade of oneself or is afraid of showing them one's true face? In their daily contacts, individuals are forced to include only identified information. Security and privacy, however, are extremely important to individuals. And rightly so, because without these factors they would be vulnerable and penetrative, which may lead to their practical demise.

Individuals of the digitized world are often disguised and almost affected. The reason for this is that if they screamed out their inner voice, they would not receive praise from society, but often hatred, humiliation or even insulting words. They hardly dare to share their inner voice with others. They are practically their own censorship apparatus.

### SUMMARY OF THE INVENTION

It is thus an objective of the invention to provide a method and a system which allows individuals to conveniently communicate without having to disclose their identities.

This objective and other objectives are solved by a method and system for distributing voice messages in accordance with the numbered embodiments as laid down further below.

A system for distributing voice messages in accordance with the invention may comprise the features of embodiment 1 below.

A method for distributing voice messages in accordance with the invention may comprise the features of embodiment 10 below.

A system for recording, storing and/or distributing voice messages in accordance with the invention may, in particular, comprise
a) a plurality of (networked) computing devices connectable to and/or over a network, in particular the internet, said networked computing devices comprising
   i) a plurality of client devices;
   ii) a central computing platform, in particular a server and/or a host;
b) the central computing platform is configured to
   i) store user data related to each of plurality of users, each user identified by a unique user ID, in particular with said user ID contained in the user data; wherein
      (1) for at least some users, the user data comprises content preference information related to a voice message content;
   ii) store a plurality of voice messages, wherein
      (1) each voice message has been created by a, in particular one, user;
   iii) store metadata related to each voice message, said metadata comprising
      (1) the user ID of said user;
      (2) a content identifier identifying and/or classifying a content of said voice message;
      (3) a language identifier identifying a language of the message;
      (4) possibly (distribution) preference data determined by the user who created the voice message, e.g. how many times the message shall be pinged, or whether a just-jump option is activated;
   iv) select a subset of users based on content preference information;
   v) distribute one or more voice messages to the subset of users [in particular as a "PING"] wherein, in particular,
      (1) the one or more voice messages are selected such that their content identifier corresponds to or matches the content preference information, and/or
      (2) the one or more voice messages are sent to one or more client devices with each client device associated with at least one user from said subset of users;
      characterized in that
   vi) the or each voice message is anonymized prior to being distributed.

A method for distributing voice messages in accordance with the invention may, in particular, comprise the steps of:
a) storing user data related to each of plurality of users on a central computing platform, each user identified by a unique user ID, in particular with said user ID contained in the user data; wherein
   i) for at least some users, the user data comprises content preference information related to a voice message content;
b) storing, on the central computing platform, a plurality of voice messages, wherein
   i) each voice message has been created by a, in particular one, user;
c) storing, on the central computing platform, metadata related to and/or associated with each voice message, said metadata comprising
   i) the user ID of said user:
   ii) a content identifier identifying and/or classifying a content of said voice message;
   iii) a language identifier identifying a language of the message;
d) selecting, in particular by central computing platform, a subset of users based on content preference information;
e) distributing, in particular by the central computing platform, voice messages to the subset of users over a network to which the central computing platform may be connected; characterized by the step of
f) anonymizing the voice message, in particular at least one voice message or all voice messages, prior to being distributed, in particular prior to being received by and/or being stored on the central computing platform.

In what follows, the system and/or method in accordance with the invention as summarized above may be referred to as the HushTalk^{™} platform. The term HushTalk^{™} platform may also be used in a more restricted sense to refer to the central computing platform.

The **network** may comprise or be any type of networks capable of interconnecting network entities. The network may be a single network or a combination of various networks. In terms of coverage range, the network may be a Local Area Network (LAN), a Wide Area Network (WAN), etc. In terms of carrying medium, the network may be a wireline network, a wireless network, etc. In terms of data switching techniques, the network may be a circuit switching network, a packet switching network, etc.

The **network** may, in particular be the internet, a global system of interconnected computer networks that uses the Internet protocol suite (TCP/IP) to communicate between networks and devices. Said internet is a network of networks that consists of private, public, academic, business, and government networks of local to global scope, linked by a broad array of electronic, wireless, and optical networking technologies, which carries a vast range of information resources and services, such as inter-linked hypertext documents and applications of the World Wide Web (WWW), electronic mail, telephony (e.g. VoIP), file sharing, etc; as described inter alia in Wikipedia article https://en.wikipedia.org/w/index.php?title=Internet&oldid=1117526806.

The **central computing platform** may comprise or be a server and/or a host as described inter alia in Wikipedia article https://en.wikipedia.org/w/index.php?title=Server (computinq)&oldid=1115121474, wherein the host may, in particular, run the server. The term server may be considered to refer to a computer program or process comprising and/or providing certain functionalities, in particular features of the invention as claimed, in particular related to storing, processing and/or manipulating voice messages, metadata, and user data, as will be described in more detail below. Through metonymy, the term server may also be used to refer to the host, in particular hardware like an electronic device used for and/or dedicated to running one or several servers, in particular server programs. Thus, the server (program) may run on a standard computer, in particular a PC, connectable (and in particular connected) to the network. For improved performance, reliability, availability, etc., it may be part of and/or be provided by a data center, and may comprise a plurality of individual pieces of hardware at different, in particular physically remote locations spaced over various countries or even continents, which may connect to one another by and/or over the network.

The plurality of **client devices** may comprise any type of electronic device capable of connecting to and/or over the network for assessing hosts, servers or websites on and/or the network. It may, in particular, comprise mobile and/or hand-held computing devices including smartphones, tablets, portable computers like laptops or notebooks etc., as e.g. described in Wikipedia article https://en.wikipedia.org/w/index.php?title=Mobile device&oldid=1110606381.

The **client devices** may be connectable (and in particular connected) to the network,and may be configured to connect to the central computing platform. One or more client devices may be configured to run a computer program, in particular an application or a so-called "app", which may comprise and/or provide functionalities for connecting to the central computing platform via the network, and/or for transmitting or submitting data, in particular comprising voice messages, metadata, and/or user data, to the central computing platform; receiving data, in particular comprising voice messages, metadata, and/or user data to the central computing platform, and/or manipulating data in particular comprising voice messages, metadata, and/or user data stored on the central computing platform. Alternatively and/or in addition, one or more client devices may be configured to run a web browser, which may comprise and/or provide functionalities for connecting to the central computing platform, and/or for transmitting or submitting data, in particular comprising voice messages, metadata, and/or user data, to the central computing platform; receiving data, in particular comprising voice messages, metadata, and/or user data to the central computing platform, and/or manipulating data in particular comprising voice messages, metadata, and/or user data stored on the central computing platform by connecting to a web server comprised by and/or executed/run by the central computing platform.

**Client devices** may comprise **audio input capabilities** for recording audio, in particular (spoken) voice messages (sometimes also simply referred to as "TALK"s) produced by users of the system and/or method. At least some users may also be referred to as HushTalkers (where a selection may be based on certain criteria, as will exemplary be described below). In particular, such client devices may comprise a microphone and or an analog-to-digital (AD) converter for converting (i.e. digitizing) a signal produced by the microphone to digital format; thus providing a respective representation of each voice message that may easily be stored by electronic devices. A (digitized) recording of a user's speech, in particular spoken message, text and/or presentation, may be referred to as an original voice message. Provided that a quality of the microphone and the AD converter is sufficiently high, the original voice message may be used to perform speaker recognition in order to identify the individual who produced the original voice message based on characteristics of his voice, as exemplary described in Wikipedia article https://en.wikipedia.org/w/index.php?title=Speaker recognition&oldid=1116181086. This may, in particular, be achieved using so called voice biometrics, including voice fingerprints or voice signatures. Likewise, the original voice message may be used to perform speaker authentication and/or speaker verification if knowledge or at least a presumption as to an identity of a producer of the original voice message exists.

**Client devices** may further comprise **audio output capabilities** for playing back and/or reproducing audio, in particular (stored) voice messages. In particular, such client devices may comprise an amplifier, a loudspeaker and/or a headphone jack, and/or a digital-to-analog (DA) converter for converting a voice message, in particular a digitized recording of a user's speech, to an analog audio output that users of the system and/or method may listen to.

**Client devices** may further comprise one or more human interface devices (HID), which may include a visual output device, in particular a (matrix) display, for providing visual, in particular graphical and/or text based, information to the user; and/or an input device by means of which the user may input data and or commands to the client device and/or the central computing platform, in particular a keyboard and/or a mouse. one or more human interface devices (HID). The one or more human interface devices (HID) may, in particular, comprise a touchscreen.

The **central computing platform** may be configured to store **user data** related to each of a plurality of users, in particular in a non-volatile memory comprised by or connected to the central computing platform, in particular over the network. Such user data may, in particular, comprise a unique user ID for each user (in particular HushTalker) of the HushTalk^{™} platform. The unique user ID may comprise or be constituted by a number, a succession of characters, in particular letters, or a combination thereof. In addition to the unique user ID, the central platform may store additional user data related to each of the plurality of users, in particular personal information containing identity information and/or contact details. Identity information may, in particular comprise names, gender, date of birth and/or nationality of each user. Contact details may comprise email address, physical address, postal codes, country of residence, and/or telephone number(s). When a (new) user wants to access the HushTalk^{™} platform for the first time, some or all personal information may be requested by the central computing platform as part of a registration process. At the same time, the user may be asked to allow storing and processing personal information. Storing and processing personal information may be restricted for compliance with national and international legal requirements. Some or all personal information, in particular email address and telephone number(s) may be verified during or after registration, wherein (further and/or future) access to the platform may be denied if false information was provided. Some or all personal information may be used as unique user ID, in particular and email address or telephone number. Personal information may be entered, queried and/or manipulated by means of and/or using a client device, in particular the one or more human interface devices of a client device. Personal information may also comprise information related to said client device, in particular a device identification number, like a model number, serial number, WiFi or MAC address, IP address, etc. of or associated with the client device. Said client device may, in particular, be temporarily or permanently associated with the user. User data may also describe a subscription type for each user, in particular whether has a free subscription or a paid subscription, and further related details.

The **user data** may also contain **content preference information** for and/or related to the respective user, where said content preference information may be indicative of topics and/or subjects said user is interested in, and/or inclined to listen to voice messages related to. The content preference information may, in particular comprise at least one keyword (like, e.g., "science", "economy", "business", "politics", "health", etc.) representative of a topic and/or subject the user is interested in. The content preference information may, in particular, (need to) be provided by a (new) user when he wants to access the HushTalk^{™} platform for the first time. The content preference information may also be altered, amended, or supplemented by the user at a later time. The central computing platform may provide a list of keywords from which the user may choose at least one. Alternatively and/or in addition, content preference information and/or related keywords may be freely defined and/or chosen by each user. One or more subsets of users may be defined, wherein each subset may comprise one or more users which have similar and/or overlapping content preferences and/or content preference information, in particular have one or more keywords in common. In particular, one subset of users may be defined and/or determined for each keyword.

The **user data** may also contain **language proficiency data** related to the respective user and indicative of which languages said user understands and/or speaks. The language proficiency data may comprise information related to a skill level for some or all of the languages the user understands and/or speaks, and may, e.g., classify the skill level for all or some languages as beginner level, intermediate level, expert level, fluent level, native speaker level, etc. The language proficiency data may comprise information related to (official) certificates of proficiency the respective user holds and/or possesses, for example TOEFL or IELTS certifications indicative of English language proficiency. Such information may or may not be authenticated and/or verified.

The **central computing platform** may be configured to store a plurality of **voice messages.** Such voice messages may in particular have been recorded using a client device, in particular a client device's audio input capabilities as described further above. For each (stored) voice message, the central computing platform may store metadata related to and/or associated with said voice message. Said metadata may, in particular, comprise the unique user ID and/or other personal information identifying and/or related to the user who created the voice message and/or submitted it to the central computing platform.

The **metadata related to and/or associated with the voice message** may comprise at least one content identifier, which may identify and/or classify a content of the voice message. The content identifier may, in particular be a keyword (like, e.g., "science", "economy", "business", "politics", "health", etc.) representative of a topic and/or subject the voice message relates to. The content identifier may in particular provided by a user when recording and/or submitting the voice message to the central computing platform. The central computing platform may provide a list of content identifiers from which the user may choose at least one for improved consistency, in particular between identifiers provided by different users. Alternatively and/or in addition, content identifiers may be freely defined and/or attributed by each user.

The **metadata related to and/or associated with the voice message** may comprise at least one **language identifier,** which may indicate a (primary) language of the voice message (content). The language identifier may in particular provided by a user when recording and/or submitting the voice message to the central computing platform. The central computing platform may provide a list of language identifiers from which the user may choose at least one for improved consistency, in particular between identifiers provided by different users. Alternatively and/or in addition, language identifiers may be freely defined and/or attributed by users.

To **distribute** one or more voice messages to at least some users, the central computing platform may, at regular and/or irregular intervals, and/or triggered by one or more predefined events, allocate and/or provide one or more selected voice messages to one or more (registered) users of the HushTalk^{™} platform. A voice message allocated to a user may (subsequently) be sent, in particular automatically sent, to one or more client devices associated with said user, in particular over the network, wherein prior consent by the user may be required to initiate the sending and/or distributing. Prior consent by the user may need to be given for each single message, or may be given in advance for a predetermined period of time, a predetermined number of messages, etc. Sending and/or distributing may in particular be effected by a so called push function. Alternatively, users may be required to actively download allocated voice message to one or more client devices associated with them, wherein one or more voice messages to be downloaded may need to be selected first, e.g. from a selection menu; which may in turn cause the one or more voice message to be sent to the user. A voice message downloaded by or sent to a user may be referred to as a "PING".

To receive, select, download, play and/or listen to (selected) voice messages, a user may need to be logged in to the HushTalk^{™} platform, in particular to the central computing platform and/or at least one client devices associated with him.

The **central computing platform may allocate** and/or provide one or more (selected) voice messages to users based on content preference information for each of said users. A voice message is then only allocated to a particular user when at least one content identifier related to and/or associated with the voice message at least approximately corresponds to and/or matches content preference information for said user, in particular matches at least one keyword comprised by the content preference information.

Alternatively or in addition, the **central computing platform may allocate** and/or provide one or more (selected) voice messages to users based on language proficiency data for each of said users. A voice message is then only allocated to a particular user when language proficiency data related to said user indicates that he is capable of understanding the (primary) language of the voice message (content), and/or capable of communicating in said (primary) language.

Before an allocated voice message is sent to a user or may be downloaded by a user, the voice message, in particular the original voice message, may be anonymized, i.e. altered in such a manner that speaker recognition, verification authentication is no longer possible. An anonymized message thus obtained from an original voice message no longer allows to identify an author of the (original) voice message, in particular a HushTalker who produced the original voice message, based on characteristics of the voice reciting the message and/or the author, at least not reliably, unambiguously, and/or with certainty.

Metadata related to a voice message may include **distribution preference data** indicative of e.g. a maximum number of users the voice message may be allocated to, a period of time over which the message may be allocated to users, geographical restrictions as to a country or place of residence of users the voice message may be allocated to, etc. Distribution preference data may also comprise settings and/or parameters related to how a voice message may be played back by a user to whom it was allocated. As such, the distribution preference data may comprise an identifier indicative of a widely known person, in particular a celebrity (e.g. an actor named Johnny D. or a singer named Lady G.), the voice of whom will be mimicked when the voice message is played back. Distribution preference data may be set separately for each voice message created and/or authored by a user, or may be inherited from respective preference data associated with the the respective user (and stored as part of his user data).

**Anonymization** may, in particular, be achieved using one of the following approaches:
1 . The original voice message may be altered by filtering, in particular band-pass filtering; shifting, enhancing or suppressing certain frequency bands, superposition of noise etc., to obtain an anonymized voice message. Preferably, a semantic content of the anonymized voice message should be at least essentially identical to a semantic content of the original voice message.
2. The original voice message may be converted to a written format using speech recognition (also known as automatic speech recognition (ASR), computer speech recognition, or speech-to-text). An (anonymized) text message thus obtained may be considered as a transcript of the original voice message, wherein a semantic content of said text message should be at least essentially identical to a semantic content of the original voice message.
3. A transcript of the original voice message (which may in particular have been obtained as described under item 2. above) is converted into an anonymized voice message by means of a text-to-speech converter).

Anonymization of (original) voice messages may be carried out by various components of the system for recording, storing and/or distributing voice messages in accordance with the invention, in particular as hereinafter claimed.

**Anonymization may, in particular, be carried out by client devices,** in particular before a voice message recorded on a client device is send or otherwise submitted to the central computing platform. If anonymization is carried out by a client device, only the anonymized message thus obtained may be submitted to the central computing platform, whereas the corresponding original voice message may never be submitted to the central computing platform - which may therefore never store the original voice message, not even temporarily. Only the anonymized message, which may be an anonymized text message or an anonymized voice message, may be stored on the central computing platform. In addition, the original voice message may be deleted from the client device immediately after submission to the central computing platform, possibly subject to acknowledgement of successful receipt by the central computing platform. If anonymization of a(n original) voice message is carried out on the client device prior to submission to the central computing platform, it is made impossible for anyone - including hackers, authorities, etc. - to gain access to the original voice message by unauthorized, forced or fraudulent or otherwise undesired access to the central computing platform. It is thus efficiently and absolutely prevented that anyone can use the original voice message to carry out voice analysis, speaker identification, verification or authorization against a will of the user who authored and/or created the (original) voice message by access to the central computing platform. Maximum security of users' privacy may thus be provided. In addition, network bandwidth requirements and/or consumption for submitting the anonymized message may be reduced as compared to a (hypothetical) submission of the original voice message, as well as (mobile) data consumption (which may be important if the voice message is to be submitted via a metered network. This applies, in particular, if the anonymized message is submitted as an anonymized text message.

Alternatively, **anonymization may, in particular, be carried out by the central computing platform.** In this case, client devices need to submit original voice messages recorded by them to the central computing platform, where they may be at least temporarily stored. Some or all original voice messages received by the central computing platform may then be converted into anonymized messages, in particular anonymized text messages or anonymized voice messages as described above. Once an original voice message has been successfully converted, said original voice message may be deleted, in particular without delay. Alternatively, at least some original voice messages received by the central computing platform may be stored for extended periods of time, and only be converted to anonymized messages when they are to be distributed, in particular sent to or downloaded to a client device, wherein conversion may be carried out once, or repeatedly each time the message is to be sent or downloaded. If anonymization of a(n original) voice message is carried out on the central computing platform, this may, inter alia, allow to reduce hardware requirements in relation to the client devices, in particular in relation to (CPU) processing power and/or memory. It may also allow to improve a quality of the anonymization due to a potentially increased availability of (CPU) processing power, memory and/or network bandwith on the central computing platform (as compared to at least some, in particular lower-end-performance, client devices), and thus in particular reduce and/or minimize potential deviations between a semantic content of the original voice message and the corresponding anonymized message. Storing original voice message on the central computing platform may also allow for correcting anonymized messages should deviations between a semantic content of an original voice message and the corresponding anonymized message become apparent, e.g. be reported by a user of the HushTalk^{™} platform.

Anonymization may, in particular, be carried out by client devices after having received or downloaded an (original) voice message from the central computing platform. To prevent or at least significantly complicate access to the (original) voice message for purposes of voice analysis, speaker identification, verification or authorization against a will of the user who authored and/or created the (original) voice message, (original) voice messages may be encrypted prior to sending by or downloading from the central computing platform, and software or app on the client device may be configured to decrypt the encrypted (original) voice messages only for the purpose of anonymization.

As with anonymization, mimicking may likewise be carried out either by client devices, in particular before a voice message recorded on a client device is submitted to the central computing platform; by the central computing platform; or by client devices after having received or downloaded an (original) voice message from the central computing platform.

Whether **anonymization** is or may be carried out on the central computing platform or on client devices prior to submission to or after sending by or downloading from the central computing platform may be determined individually by at least some users, in particular as a general preference (which may be stored as user data) or separately for each voice message created and/or authored by each of said some users. It may also be a global setting of the HushTalk^{™} platform, which may apply to some or all users, e.g. depending on a country of residence and/or a subscription type.

A voice changer module may be provided as part of the central computing platform and/or at least some client devices for carrying out anonymization and/or mimicking

Once a first voice message has been allocated to, sent to and/or downloaded by a user - or, in other words, pinged to a user - said user may decide to respond to said first voice message by creating a second voice message and submitting said voice message to the central computing platform. said second voice message, which may also be referred to as a "PONG", may then be allocated (only) to the author and/or creator of the first voice message, who may receive or download it. The second voice message may, in particular, be anonymized prior to being sent or downloaded. The user may also rate the first voice message, e.g. by awarding a number of points in accordance a predetermined scale. Information related to ratings awarded by the user (and possibly other users) may be stored on the central computing platform as part of the metadata related to the first voice message, in particular rating data. Information related to ratings awarded to voice messages created and/or authored by each user may also be stored in the user data associated with the respective user. Ratings may, in particular, comprise likes, dislikes, applauds counts and/or reports. A report may indicate that a voice message does not comply with rules related to an (allowable) content, and my need to be confirmed by a supervisor of the method and system in accordance with the invention.

To perform certain actions and/or use certain functionalities of the HushTalk^{™} platform (for example record and/or submit a certain number of voice messages), a user may need an amount of credit. Credit, in particular a total (amount) of credit held by a user, may be represented by a number, in particular an integer or decimal number, which may be stored on the central platform as part of user data related to each individual user. Credit may be bought in exchange for (official) currency, but may alternatively or in addition be awarded for particular, predefined activities (e.g. submission of a voice message related to a predefined topic) and/or events (e.g. when one or more ratings exceeding a predetermined threshold have been awarded to a voice message by other users). The HushTalk^{™} platform may offer possibilities for exchanging credit into (official) currency, and/or to transfer (some) credit to another user.

Non-fungible tokens (NFTs) as exemplary described in Wikipedia article https://en.wikipedia.org/w/index.php?title=Non-fungible_token&oldid=1182795495 may be created from voice messages. Such NFTs may be referred to as Speech NFTs. The creation of Speech NFTs may involve a multi-stage process. Initially, an advanced user or HushTalker records a voice message, in particular an audio clip via the HushTalks platform, e.g. from their Talkestan. This recording may then be converted into a digital format and assigned to a specific category or theme. Subsequently, a unique hash value may be generated, providing a distinct identification for the audio clip. This hash value may then be stored on an underlying blockchain, as exemplary described in Wikipedia article https://en.wikipedia.orq/w/index.php?title=Blockchain&oldid=1183559368.

Preferably, a voice message or part and/or excerpt thereof from which a Speech NFT shall be created is recorded without any anonymization and/or voice filter, and/or with the HushTalker's own voice, inter alia to allow for a specific identifiable assignment of the Speech NFT to the user.

A maximum length of Speech NFTs, in particular of voice messages or parts and/or excerpts thereof from which voice NFTs are to be created may be limited, e.g. to 30 seconds.

Hybrid authentication may be implemented to extend a limited mapping of linguistic characteristics. This may take into account additional linguistic characteristics of the user, which may improve security and/or the user experience.

Speech NFTs may be stored on said blockchain, wherein the blockchain may be utilized for storing Speech NFTs is based on distributed ledger technology. Each created Speech NFT may be registered within a dedicated smart contract on the blockchain. This smart contract may include information such as the hash value of the audio clip, the creator of the Speech NFT, and a timestamp of creation. This ensures traceability of the authenticity and origin of the content.

Speech NFTs may also be traded, The trading of Speech NFTs may occur through an integrated marketplace within the HushTalks platform. This marketplace may employs smart contracts to facilitate secure exchange of Speech NFTs among users. Transactions may be recorded in real-time on the blockchain and can be publicly viewed.

The blockchain utilized for Speech NFT storage may operate on a decentralized consensus mechanism, ensuring high security and resilience against manipulations. The management of this blockchain may be conducted by a distributed network of nodes, which may be operated by the HushTalks community. Each node may validate and verify transactions to maintain the integrity of the network.

Within the HushTalks platform, Speech NFTs may also function as digital assets. Users may employ their Speech NFTs to perform specific actions, such as unlocking premium features, participating in exclusive events, or acquiring special content.

The focus of the blockchain may be put on managing the transaction history and ownership of the NFTs. The actual voice messages or parts and/or excerpts thereof may not be stored on the blockchain, but, in particular, on the central computing platform. This enables efficient management and optimal use of resources.

### BRIEF DESCRIPTION OF THE DRAWINGS

The subject matter of the invention will be explained with respect to further optional detail in the following text with reference to further exemplary embodiments which are illustrated in the attached drawings.

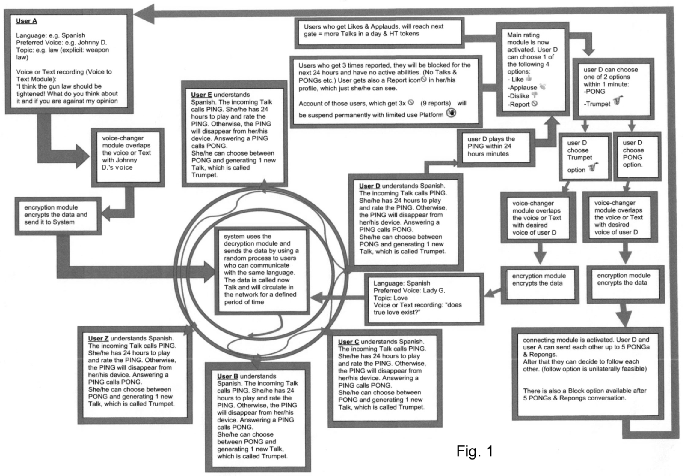

Fig. 1 illustrates an exemplary embodiment of the system and method in accordance with the present invention.

### DETAILED DESCRIPTION OF EXEMPLARY EMBODIMENTS

Fig. 1 illustrates an exemplary embodiment of the HushTalk^{™} platform, a system and method in accordance with the present invention.

An exemplary implementation of the invention as summarized above and/or hereinafter claimed may comprise the following features:
- TALK: TALK is the name of a recorded voice (in particular an (original) voice message) that can last a maximum of 101 seconds. By a random algorithm a TALK is sent to different users who speak the same language with identical topics as like generated TALK.
- PING: incoming TALKs are called in the HUSHTALKS Platform PING. In other words, the TALK is called PING after the receiver has received the operated TALK.
- PONG: If the receiver/user plays a PING, she/he get automatically the opportunity to send a reply to the sender. If she/he chooses this option, the replied answer is called PONG.

There are 2 type of sending a TALK:
1. Just Jump: System sends The TALK for the next 24 hours to same language users with the same favorite topics and the TALK (or PING) will get as many PONGs as possible.
2. JET PONG: This is an option for those users who needs urgent feedbacks (or PONGs). The TALK in a JET PONG process is only for the next 15 minutes activated until user gets 5 PONGs. If this does not happen within the next 15 minutes, she/he doesn't lose this TALK and can try it again. After 15 minutes the TALK will be deleted automatically.

The following icons/symbols are provided and have meaning as follows:
- Passengers' icon is given to all user after registration.
- Red mouth icon: If a Talk receives 5 PONGs within 10 minutes, the user will reach his/her next gate and receives one additional Talk per day and a red mouth icon . User gets also 1 HT token, which she/he can use to buy more abilities in platform.
- Singing mouth icon (or speaker icon): If a Talk receives 30 PONGs in the next 24 h, the user will reach his/her next gate and receives 2 additional Talks per day and a singing mouth icon (or speaker icon). User gets also 2 HT token, which she/he can use to buy more abilities in platform.
- Ear icon (Headphone icon): If a user chooses 10 times in a row the PONG option, the user will reach his/her next gate and receives 2 additional Talks per day and an ear icon (or Headphone icon). User gets also 2 HT token, which she/he can use to buy more abilities in platform.
- Heart icon: If a user reaches 20 Likes, the user will reach his/her next gate and receives 2 additional Talks per day and a red heart icon. User gets also 2 HT token, which she/he can use to buy more abilities in platform.
- oil lamp icon (or Latern icon): If a user receives 100 Applauses within a month (30 days), the user will reach his/her next gate and thus the advanced level. This user receives 8 additional Talks and an oil lamp icon (or Latern icon). User gets also 8 HT token, which she/he can use to buy more abilities in platform.
- HUSHTALKER icon: The term HushTalkers may be used, in particular be used exclusively, to refer to those users of the HushTalk platform which are rated by the community as particularly positive users due to, e.g., their useful posts and content and may be awarded the HushTalker symbol. Alternatively or in addition, if a user reaches 1000 followers and reaches also all other icons above, that user will reach his/her highest gate and thus the highest level in the HushTalks world. This user receives the unlimited number of Talks and an HUSHTALKER icon. User gets also 30 HT token, which she/he can use to buy more abilities in platform. By obtaining the HushTalker symbol, the user may receives additional opportunities to use the platform, including the possibility of monetization and/or of generating income and/or revenue.

HushTalkers can generate/send three-minute talks instead of 101 second. They can choose a unique personal username. Other user can search HushTalkers username and take part on their talkestans or hear recorded ones. HushTalkers can still participate in Clubs or in other Talkestans anonymously if they want. Their profile turns into passenger look, if they use this option. To follow and been followed will be still available for the HushTalker on invisible modus but as long as she/he is in anonym/invisible modus, other user cannot see her/his profile. HushTalker can also undo this function during their participation in the clubs/talkestans. They only have this ability in other talkestans and not in their own talkestans. (the explanation of clubs and talkestans follows).

Users may create and use the following other sections in the App:
- Talkestan: HushTalkers are able to open their own speaking rooms, the-so-called TALKESTANs. Talkestans are spaces, the HushTalkers can speak in. Talkestans are live sessions. Each session Talkestan lasts a maximum of 30 minutes. Countless users can participate in a talkestan as listeners and if the host HushTalker wants, she/he can select a user from the listeners to come up and speak to the listeners as a speaker in talkestan along with HushTalker. if desired, talkestans can be saved by HushTalkers and played back indefinitely by other users. HushTalkers receive a certain number of HushTalks token on their Wallet, depending on the number of participants in their talkestans and the duration of views. They could transfer these cryptocurrencies to any other wallet of their choice or buy with their token's Boosters, NFTs, famous voices (and much more abilities in the future) from store. HushTalkers will be able to turn off their Visibility in the clubs or in other Talkestans. In other words, they have this ability to participle as a passenger in a club or Talkestan. They can undo this during their participation. The follow option turns off during their "invisible "participations in clubs.

Alternatively or in addition, HushTalkers may be given the opportunity to make their own live podcast sessions, known as "Talkestans", available on the platform and then save them to their channel. Depending on the number of views of a Talkestan, the HushTalker may receive a certain number of cryptocurrencies as a reward. These cryptos may credited to HushTalker's wallet and may be exchanged for fiat money on an exchange (monetization). In addition, HushTalkers may select parts of their Talkestan session at the end of their Talkestan and ask the platform to generate a Speech NFT for them.
- Clubs /On Air Clubs: Every user can create a club and add a club in to platform. Created clubs are managed decentralized by the system. Users can speak in clubs up to 4 minutes in their speaking-turn. After a user creates a club, her/his followers get a Notification and she/he can see this created club on her/his profile, section joined clubs. Users which create a club have no authority about this club and system will manage all next steps automatically. After a club is created all members of this club can add a sub-club to go on-Air. Sub-clubs are rooms subset in clubs. They are actually live sessions with different topics, which can be up to 5 hours. If club members are finish with their session earlier than 5 hours, the ON-AIR Club will be closed after the last member left the session. If there will be no more activities in an On-AIR-Club for 30 minutes, a countdown of one minute will be shown and after that the ON-AIR-Club is closed and deleted. All contents, stats and information is deleted after a club session is closed.

In what follows, detailed description of various functionalities implemented on a central computing platform or on client devices in accordance with the invention as summarized above and/or hereinafter claimed is provided.

1.1. Register or Registration module - a register module may allow (new) users to join the HushTalk^{™} platform and become a HushTalker, which may require a registration process. If a HushTalker decides to monetize his channel, he must at least disclose his real identity to the platform, e.g. by submitting documents proofing his identity as e.g. a copy of a passport, identity card or driving license, and/or documents proofing his residence.

Because only then can a secure and legally compliant transaction to HushTalker be guaranteed. The HushTalker may continue to maintain his anonymity vis-a-vis the community despite such disclosure. Module: Register module; Submodules: Explaining tour, Terms of service, Choosing the fluent language

### Register with email (v1) - Register.drawio

User will open the app and in the first step he/she can see the introduction page. Users can see these pages step by step or skip the whole process. The user clicks on the register button. The email field will be displayed and the user should enter the email and click on the "send email" button.

The first email will be checked in the backend to make sure it's not a duplicate email. If it's a duplicate one displays an error to the user and it is done.

If the email is not a duplicate email. OTP code will be sent to the user's email and a verification form will be displayed to the user. The user should enter the received OTP code and click the verify button. If the code is wrong, display an error message on the "verify" form and the user can try it again in the specified time. Or if the time limit exceeds the user can use the "resend the email" option.

If not, display the password form to the user. User will fill the password and confirm the password and click on the "Register" button.

If the password and repeat pass are not the same, display an error message.

If the password is weak, display an error message to the user.

If pass and repeat pass is the same and password is strong enough a random username should be generated Then the user should insert it into the database and display the registered message and display login link.

### UI Tasks

Introduction Page Design
Email Page Design
Verify Page Design
Set Password Page Design
Set basic settings Page Design
(Set first, second language,
Set avatar
Set interested topics)

### Frontend Tasks

Display Introduction
Display Email Page
Display Verify Page
Display Set Password Page
Display Set basic settings Page Design
(Display first, second language,
Display avatar
Display topics)

### Backend Tasks

Check email
Verify email
Generate OTP code
Send OTP code
Verify OTP code
Lock user
Is user locked
Get OTP code count in last n minute
Update avatar
Load default avatar
Set user languages
Set interested topics
Generate random username
Check password strength
Register

1.2. Login module - a login module may allow a user to connect to the central computing platform, in particular through a client device. The login module may provide functionality for recovery in situations where the user has forgotten his password. The login module may submodules: Sign up, Login module, Forgot password. Connected Modules may include the Registration module

### Login with email and password (v1) - Login.drawio

### Story

User fills out the user/pass and clicks on login. user/pass will be checked in the database and if it is the correct user will be redirected to the home.

If not, display an error message to the user.

### UI Tasks

Login Page Design

### Frontend Tasks

Display Login Page

### Backend Tasks

Login
Is User Exist (if not, do not inform the user about it)
Check user pass
Redirect to home

### Forgot Pass (v1) - ForgotPass.drawio

### Story

User clicks on forgot password link, forgot pass form will be displayed. The user enters their email v(1) and clicks on send reset link. email will be checked if it exists or not. If it exists, send a reset link to the user's email.

If the user clicks on the reset link password fields will be displayed and the user should fill out a new password and password repeat.

### UI Tasks

Forgot Password Page Design
Reset Password Page Design

### Frontend Tasks

Display Forgot Password Page
Display Reset Password Password Page

### Backend Tasks

Is User Exist
Reset Password
Send reset pass link (email v1)

### 2. Settings module

The Settings module may allow each user to view, delete, modify or otherwise manipulate various settings, including but not limited to user data related to him. It may comprise submodules: Profile settings, Terms of Service (also integrated in Register module), Forgot password. Connected Modules may comprise: Profile module, Profile settings

### Settings(v1)

### Story

User clicks on the settings menu, this menu should appear on the settings page:
Profile settings: user can see and update profile settings.

Notification settings: user can keep notification on or turn off notification for a specified time.

Language settings: users can choose voice language. The default first language should be English. Users can choose more than one language.

### Security:

### Additional resource:

### FAQ:

Online support:
tour: when a user clicks this menu they will see the tour option. By clicking the tour button the user can see explaining tour.

### UI Tasks

Settings Page Design
User Profile Settings Page Design (check more details)
Notification Settings Page Design (check more details)
Language Settings Page Design (check more details)
Security Settings Page Design (check more details)
Additional resource Settings Page Design (check more details)

### Frontend Tasks

Display Settings Page
Display User Profile Settings Page (check more details)
Display Notification Settings Page (check more details)
Display Language Settings Page (check more details)
Display security Settings Page (check more details)
Display additional resource Settings Page (check more details)

### Backend Tasks

Load settings
Get User Profile (check more details)
Get Notification Settings (check more details)
Get Language Settings (check more details)
Get security Setting (check more details)
Get additional resource Settings (check more details)

### 2. Profile Settings

The Settings module may allow each user to view, delete, modify or otherwise manipulate user data related to him (for which a login may be required). It may comprise Submodules: Edit avatar, Edit voice, Edit language, Edit EMail, Choosing favorite topics. Connected modules may comprise : settings module, Store module
Profile settings (V1)
Users can click on account settings to change some account settings.
Avatar: Users can choose their avatar. (V1)
Username: User can see their username,
hushtalker can edit their username.
Password: All users can change their password if any
Email: Users can change their email.
Interested Topics: Users can add/remove interested topics. They can ignore this setting. By default all topics will be displayed to the user.
Ping/Pong Language: users can choose their fluent language to set for their ping pong. The first language is mandatory. Deactivate Your Account: users can deactivate their profile.

### UI Tasks

Profile Settings Page Design

### Frontend Tasks

Display Profile Settings Page

### Backend Tasks

Load Profile Settings info
Change User Name (only hushtalker)
   □ Entekhabe avatar az liste pishfarz
   □ (bedoone detail)

### Avatar settings (v1) - profile-Avatar-settings.drawio

### Story

In profile settings, the user can change avatar settings. Users can choose clothes, faces (skin, eyes, hair, ...), and accessories.

### UI Tasks

Avatar settings Page Design

### Frontend Tasks

Display Avatar settings Page

### Backend Tasks

Load user avatar
Upload new avatar

### Username settings (v1) - profile-UserName-settings.drawio

### Story

In profile settings, User can see their username, hushtalker can edit their username. Hushtalker should enter their password and edit their username. Also in order to save these settings an otp code will be sent to the user email and the user should enter this code to confirm changes. If this code is not correct the first time, an error message will be displayed. the user can try again if the user didn't enter code before determinate time, they can use the resend email option in order to send code again.

### UI Tasks

Username settings Page Design

### Frontend Tasks

Display username settings Page

### Backend Tasks

Load user username
Change username
Is hushtalker
Check password
Generate OTP code
Send OTP code
Verify OTP code
Lock user
Is user locked
Get OTP code count in last n minute

### Voice filter settings (v1) - profile-voice-filter-settings.drawio

### Story

In profile settings, the user can change their voice filter.

### UI Tasks

Voice filter Page Design

### Frontend Tasks

Display voice filter Page

### Backend Tasks

Get existing voice filters
Play
Change voice filter
Get user's current voice filter
Change password (v1)

### Story

In profile settings, the user can change their password.

### UI Tasks

change Page Design
Set old and new password page Design

### Frontend Tasks

Display Change password page
Display set new password page

### Backend Tasks

Change password
Check authentication (user, old password)
Generate OTP code
Send OTP code
Verify OTP code
Lock user
Is user locked
Get OTP code count in last n minute
Choosing a interested Topics (v1) - profile-interested-topics-settings.drawio

### Story

In profile settings, the users can choose their favorite topics. When a user clicks on the favorite topics menu all existing topics will be loaded
and the user can choose favorite topics one by one.
Choosing none topic = choosing all topic

The user can type topics and similar topics will be loaded and the user can choose from this list or he/she can add a new topic. There is a
limitation for characters that the user should not exceed the limit, otherwise an error message will be displayed. Then save the user's favorite topics settings.

### UI Tasks

Topics settings Page Design (multi-select)

### Frontend Tasks

Display Topics settings Page
Add Topic
Remove Topic

### Backend Tasks

Get all Topics (optional: filter)
Insert a new topic
Load User's interested Topics
Update the user's interested Topics

### Language settings (v1) - language-settings.drawio

### Story

In profile settings, the user can change voice language. The user should select a voice language, then all of these languages will be listed and the user can choose the desired language. Also, the user can change app language, for app language users can set one language as default. For each user language, all languages should be listed and users should select a default language.

### UI Tasks

Language Settings Page Design
Voice Language settings box Design (English, german, persian) (V1)

### Frontend Tasks

Display language settings Page
Display Voice Language settings box

### Backend Tasks

Get user's voice languages
Update user's voice language
Get voice languages

### Security (V1) - settings-Security.drawio

User can change these options in security settings:
Profile Visibility: hushtalker can make their own profile public or private
Blocked List: user can see list of accounts who block.

### UI Tasks

Security Settings Page design

### Frontend Tasks

Display Security Settings Page

### Backend Tasks

Load Security Settings
Load blocked list
Update blocked list
Load Otp code login
enable/disable otp code login
Load profile visibility
Change profile visibility
Display active sessions
Manage active sessions
Display connected accounts
Manage connected accounts
Notification settings (V1) - settings-notification.drawio
User can set these notifications:
   Talkestan notification: If following Hushtalkers user can disable this notification for 30m/6h/24h/3d/1w/1m Clubs Notification: user can disable this notification for 30m/6h/24h/3d/1w/1m Interested topics Notifications: user can disable this notification for 30m/6h/24h/3d/1w/1m Following users notification: user can disable this notification for 30m/6h/24h/3d/1w/1m accounts you don't follow: user can disable this notification for 30m/6h/24h/3d/1w/1m accounts Who don't follow you: user can disable this notification for 30m/6h/24h/3d/1w/1m

### UI Tasks

Notification settings page design

### Frontend Tasks

Display Notification settings page

### Backend Tasks

Load Notification settings
Update Notification settings
Additional resources (v1) - Content base
Users can see these options on the settings page:
   Terms of Service => link to page
   Privacy Policy => link to page
   Help Center
   Frequently Asked Questions
   tour

### UI Tasks

Additional resources Page design
Tour design

### Frontend Tasks

Display Additional resources Page
Display Tour

### Backend Tasks

Display Terms of Service
Display Privacy Policy
Display Frequently Asked Questions

### 4.1. Profile module

The Profile module may allow each user to view, delete, modify or otherwise manipulate user data related to him (for which a login may be required).

The profile module may comprise Submodules: Icons module, Followers module, Talks module (generated Talks), PINGs module, Avatar

Connected Modules may comprise: Settings module, Home module, Own Talkestans module, Clubs module, Wallet module, Store module

### Load user profile (v1) - load-profile.drawio

### Story

Each user can see their own profile info. Users can't see each other's profiles. Hashtalker can make their profile public or keep it private.

On the profile page user can see this information:
Followers count, following count, like count, applauds count, dislike count(ping/pong), report count, trumpet count, talkestans option, clubs option, pings option, talks option, Number of Remaining TALKS
If this user is a hushtalker other users can see their account (If hushtalker made his/her account public). Also they can see the follow button on the hushtalker profile.

### UI Tasks

Profile Page Design (multi-select)

### Frontend Tasks

Display Profile Page

### Backend Tasks

Load Profile
Load Avatar
Get the followers count
Get the following count
Get like count
Get dislike count
Get applauds count
Get trumpet count
Get report (prohibition) count
Get the Number of Remaining TALKS
Get user's Talks (check more details)
Get user ping/pong s (check more details)
Get user clubs (check more details)
Get user's talkestan or talkestan's that user participated (check more details)
Display follow button (only hushtalkers)
Load My Temple (check more details)

### Get User's Talks (v1) - profile-get-talks.drawio

### Story

User can see their talks (just jump for 24 h/jetpong for n minute)
Also users can remove their talks

### UI Tasks

User's Talks Page Design (talk, title, likes count, dislikes count, applauds counts, reports count, remove )

### Frontend Tasks

Display User's Talks Page

### Backend Tasks

Get user's talks
Get talks reactions
Remove my talk (and all related pongs)
Player (Play/Pause/forward/backward)
Load pongs

### Get ping/pongs (v1) - profile-get-pingpong.drawio

### Story

Users can see their pongs to others' talks unless those expired or were removed by the talk owner. By clicking on ech talk user will be able to see related talk in a new page. The user's pong is under talk but Still it is bigger than the talk box.
talk> pong

If users click on talk then they can see the whole conversation. Talk box is bigger and all pongs under that talk> pong> pong> ...

Also users can remove their pongs. This will not affect the main talk.

### UI Tasks

User's ping/pong Page Design (pong,likes, dislikes, applauds, reports, remove )

### Frontend Tasks

Display User's Talks Page

### Backend Tasks

Get user's pongs
Get pong reactions
Remove my pong(and all related pongs)
Player (Play/Pause/forward/backward)
Load related talk
Load all conversation
Get user's clubs (v1) - profile-get-club-list.drawio

### Story

Users can see club's that he/she joined or scheduled or marked.

### UI Tasks

Club List Page Design (member count, topics, scheduled sub club list (date, time))
Create a club Page Design
Schedule a sub club

### Frontend Tasks

Display Club List Page
Display Create a club page
Display Schedule sub club page

### Backend Tasks

Get joined clubs
Get marked clubs
Create a club (check more details)
Schedule a sub club (check more details)
Share the club
Join the club
Mark the club
Report the club (ex: users can report a club in order to remove it)

### 4.2. PONG process module

The pong module may provide functionality for a user to respond to a voice message, in particular a ping, allocated and/or distributed to him by the central computing platform.

It may comprise Submodules: Main Rating module, JET PONG module

Connected Modules may comprise: TALKS module, PING module, Notification module, Profile module, Search module, Icons module, Followers module, Followings module

### Send Pong (v1) - pong.drawio

### Story

Users can send pongs to any ping they hear. They can send pong N minutes before talks are deleted automatically. Users can reply to pongs too, except jetpong's pong.

User can choose this options when play a ping in the timeline and rate the ping: like, dislike, applause, report, escape, back,

After rating a ping user can choose these options in n minute: Trumpet, pong, escape, back, Pings will be removed after specified time: just jump = 24h, jetpong=10 minute

Pong to jetpong will be removed after 2 minute, if the user plays this pong before this time it will be removed after listening.

After 5 ping/pong user can see these options:
Follow: users can follow each other. Unless the following user blocked the current user.'
Block: users can block each other.

### UI Tasks

Pong box design (ping/jetpong/pong id, recorder voice, date/time, remaining time)

### Frontend Tasks

Display Pong box

### Backend Tasks

Send pong to specific ping/jetpong/pong
Earn trumpet
Get trumpet count
Record a pong
Play a ping/pong
Remove jetpong's pong after play
Rate ping
Like ping
Dislike ping
Applause ping
Report ping
Back to ping
Escape
Add to Blocked list
Follow user
Send pong notification
Get Remaining time to pong
Get remaining time to remove
Get remaining time to hear

### 4.3. PING module

The ping module may provide functionality for a user to submit a recorded voice message to the central computing platform, and for submitted voice messages to be allocated and/or distributed to selected (other) users, in particular by the central computing platform.
Module: PING Submodules: - Main rating module - Trumpet module - PONG module
Connected Modules: My Tempel module, Notification module, the Search module

### Send Ping (v1) - ping.drawio

### Story

Users can send pings to the timeline.

User should click on the add talks/ping button on the bottom menu, then he/she will see a send ping page. They can choose ping/talk type: just jump or jetpong for type.

Ping will be sent to users with the same interest and language. And will be displayed on their timelines. After sending, the ping system will check the ping's reactions after 60 minute. If ping gets 1% of language communities like or applause system will boost ping automatically.

Hushtalkers and users have different time limits for their pings.

### UI Tasks

Create a ping box design (title, language, topic, recorded voice, remaining time)
Create a ping list design
Display whole ping/pong in first level (ping/pongs)
Create a ping and my pongs design (my ping/pongs)

### Frontend Tasks

Display ping box in timeline
Display ping list in timeline
Display whole ping/pong in first level (ping and all of the related pongs)
Display ping and my pongs design

### Backend Tasks

Create a ping (title, recorder voice, username, )
Check title length
get ping time limit (hushtalker/user)
Set hashtags
Get remaining talks
Update remaining talks
Reset remaining talks
Get remaining trumpets
Update remaining trumpets
Reset trumpet talks
Get topics (optional filter)
Set ping topics
Set ping voice filter
Set ping language
Get ping notification settings
Send notifications
Send ping to timeline (language, topic, )
Send ping notif (to users who enable notification)
Golden N minute timer
Is Golden ping
Get ping's like count
Get ping's dislike count
Get ping's applause count
Boost ping
Auto remove timer
Record a ping
Play/replay ping (play/pause/forward/backward)
Display all pongs
Remove ping/talk and all pongs

### 5.1. Generating TALK Just Jump module

### 5.2. Generating TALK JET PONG module

These modules may provide some additional functionality for the two talks that are already mentioned in the ping/pong part.

### 6.1. Clubs module

### Create a club (v1) - club-create.drawio

### Story

Each user can create a club

### UI Tasks

Create a club Page Design

### Frontend Tasks

Display club info Page

### Backend Tasks

Get similar hashtags
Set hashtags
Load country list
Set country
Load city list
Set city
Set organization
Create a club
Send notifications
Share the club
Share on other apps
Schedule a sub Club (v1) - club-schedule.drawio

### Story

Each user can schedule a sub club. she/he should set date, time and topic of discussion

### UI Tasks

Schedule a sub club Page Design

### Frontend Tasks

Display scheduled sub club info Page

### Backend Tasks

Schedule a sub club (date, time, topic of discussion)
Share the sub club
Share on other apps
Send notifications to members

### 6.2. All On Air Clubs (entering from Home module)

### Display on air clubs (v1) - home-on-air-clubs.drawio

### Story

Each user can see on air clubs and talkestan on the home page. By clicking on air button on the top of the home page

### UI Tasks

On air clubs and talkestans list
On air clubs list design
On air talkestans list design

### Frontend Tasks

Display on air clubs (filter: title, hashtags, subject of discussion)
Display on air talkestans (filter:)

### Backend Tasks

get a on air sub club (date, time, subject of discussion)
get a on air talkestan (filter: date, time, ...)
clubs On air (v1) - club-on-air.drawio

### Story

Each user can see on air clubs.

Club has a N minute expiration time. If the number of clubs will be less than 2 before this time, the club will be closed automatically.

### UI Tasks

On air club page design

### Frontend Tasks

Display On air club page

### Backend Tasks

Call 51% Report speech
Call 51% Next Speaker
Expire club timer
Online member count listener
Close sub club
Listener Actions

### Story

Each user On air club info and join the club. After joining, the user will be added to the listener box.

Then she/he can:
Raise hand:
Remark
Request next speaker
Like
Dislike
Report speech
Follow speaker

### UI Tasks

Listener box design
Raised hands box design
Marked users box design
Speaker, follow report box

### Frontend Tasks

Display Listener box
Display Raised hands box
Display Marked users box
Display Speaker, follow report box

### Backend Tasks

Start send Sub Club On air (date, time, topic of discussion)
Add to listener box
Remove from listener box
Add to raise hand box
Remove from raise hand box
Add to remark box
Remove from remark box
Like speech (speaker, speech)
DisLike speech (speaker, speech)
Request Report speech (speaker, speech)
Request Next Speaker (speaker, speech)
Speakers actions

### Story

When user chooses as speaker he/she can just start to speak or use these two options:
Next:
Giving Remarks:

### UI Tasks

Speaker box Design (avatar, username, next, remarks)

### Frontend Tasks

Display Speaker box

### Backend Tasks

Next (skip speech)
Give a remark
Choose a remarker
Remarked actions

### Story

When a user gets a mic from the speaker for half of the speaker time, he can just start to speak or return the mic.

Or return the mark after speaking if it still does not exceed their limit.

### UI Tasks

Remarked Speaker box Design (avatar, username, next, return mic)

### Frontend Tasks

Display Remarked Speaker box

### Backend Tasks

Next (skip speech)
Return mic

### 7. Home (timeline, suggestions, v1)

The home module may display pings/ clubs/ talkestan for each user, in particular after login.

### 8. Search (v1)

The search module may allow a user to search for other users, hushtalkers, and/or clubs.

### Search hushtalkers

### Story

Users can't search each other. Users can search hushtalkers.

### UI Tasks

search Page Design
Hushtalker filter box

### Frontend Tasks

Display result for hushtalkers Page

### Backend Tasks

Get hushtalkers (filter)
Search clubs

### Story

Users can search clubs.

### UI Tasks

search Page Design
Clubs filter box

### Frontend Tasks

Display result for clubs Page

### Backend Tasks

Get clubs (filter)

This description and any accompanying drawings that illustrate aspects and embodiments of the present invention should not be taken as limiting claims defining the protected invention. In other words, while the invention has been illustrated and described in detail in the drawings and foregoing description, such illustration and description are to be considered illustrative or exemplary and not restrictive. Various mechanical, compositional, structural, electrical, and operational changes may be made without departing from the spirit and scope of this description and claims. In some instances, well-known circuits, structures and techniques have not been shown in detail in order not to obscure the invention. Thus, it will be understood that changes and modifications may be made by those of ordinary skill within the scope of the following claims. In particular, the present invention covers further embodiments with any combination of features from different and/or individual embodiments as described above and below. Embodiments in accordance with the invention may, in particular, include further and/or additional features, elements, aspects, etc. not shown in the drawings or described above.

The disclosure also covers all further features shown in any Figure, individually, although they may not have been described in the afore or following description. Also, individual alternatives of the embodiments described in any Figure and the description and individual alternatives of features thereof can be disclaimed from the subject matter of the invention or from disclosed subject matter. The disclosure comprises subject matter consisting of the features defined in the claims or the exemplary embodiments as well as subject matter comprising said features.

The present disclosure also includes embodiments with any combination of features which are mentioned or shown above and/or below, in various embodiments or variants. It also includes individual features as shown in the Figures, even if they are shown there in connection with other features and/or are not mentioned above or below. The disclosure comprises embodiments which exclusively comprise the features described in the claims or the exemplary embodiments, as well as those which comprise additional other features. The steps of any method disclosed above or claimed below may preferably be carried out according to the order in which they are presented, but may also be carried out a different order.

Furthermore, in the claims the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially", "substantially", "about", "approximately" and the like in connection with an attribute or a value particularly also define exactly the attribute or exactly the value, respectively. The term "about" in the context of a given numerate value or range refers to a value or range that is, e.g., within 20%, within 10%, within 5%, or within 2% of the given value or range. Components described as coupled or connected may be electrically or mechanically directly coupled, or they may be indirectly coupled via one or more intermediate components. Any reference signs in the claims should not be construed as limiting the scope.

Unless stated otherwise, it is assumed that throughout this patent application, a statement a ≈ b implies that |a-b|/(|a|+|b|) < 10, preferably |a-b|/(|a|+|b|) < 100, wherein a and b may represent arbitrary variables as described and/or defined anywhere in this patent application, or as otherwise known to a person skilled in the art. Further, a statement that a is at least approximately equal or at least approximately identical to b implies that a ≈ b, preferably a = b. Further, unless stated otherwise, it is assumed that throughout this patent application, a statement that a >> b, or that a is significantly larger or much larger than b, implies that a > 10b, preferably a > 100b; and statement that a << b, or that a is significantly smaller or much smaller than b implies that 10a < b, preferably 100a < b. Further, a statement that two values a and b substantially deviate from one another, or differ significantly, implies that a ≈ b does not hold, in particular that a >> b or a << b.

Embodiments of the invention may involve one or more electronic or computing devices, and/or involve the use of such devices. Said devices typically include a processor, processing device, or controller, such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. In particular, the battery management system, the control system may, and/or the control system settings update unit may be partially or fully implemented on such electronic or computing devices, individually or jointly.

The methods described herein may be partially or fully implemented as or in the form of software, which may in turn be encoded as executable instructions embodied in a non-transitory computer readable medium, including, without limitation, a storage device and/or a memory device. Such instructions, when executed by a processing device, cause the processing device to perform at least a portion of the methods described herein, preferably in real-time. The above examples are exemplary only, and thus are not intended to limit in any way the definition and/or meaning of the term processor and processing device.

As used herein, i.e. anywhere in this document, the terms "computer," and related terms, e.g., "processor", "processing device," central processing unit (CPU)", "computing device," and "controller" may not be limited to just those integrated circuits referred to in the art as a computer, but broadly refers to a microcontroller, a microcomputer, a programmable logic controller (PLC), and application specific integrated circuit, and other programmable circuits, and these terms are used interchangeably herein. In the embodiments described herein, memory may include, but is not limited to, a computer-readable medium, such as a random access memory (RAM), a computer-readable non-volatile medium, such as a flash memory. Alternatively, a floppy disk, a compact disc - read only memory (CD-ROM), a magneto-optical disk (MOD), a digital versatile disc (DVD), a USB stick and/or a flash memory card (e.g. CF, SD, miniSD, microSD) may also be used. Also, in the embodiments described herein, additional input channels may be, but are not limited to, computer peripherals associated with an operator interface such as a mouse and a keyboard. Alternatively, other computer peripherals may also be used that may include, for example, but not be limited to, a scanner. Furthermore, in the exemplary embodiment, additional output channels may include, but not be limited to, an operator interface monitor.

Further, as used herein, the terms "software" and "firmware" are interchangeable and include any computer program which may be stored in memory for execution by computers as defined above, workstations, clients, and/or servers.

As used herein, the term "non-transitory computer-readable media" is intended to be representative of any tangible computer-based device implemented in any method of technology for short-term and/or long-term storage of information, such as, computer-readable instructions, data structures, program modules and submodules, or other data in any device. Therefore, the methods described herein may be encoded as executable instructions embodied in a tangible, non-transitory, computer-readable medium, including, without limitation, a storage device and/or a memory device. Such instructions, when executed by a computer as defined above, cause the computer to perform at least a portion of the methods described herein. Moreover, as used herein, the term "non-transitory computer-readable media" may include all tangible, computer-readable media, including, without limitation, non-transitory computer storage devices, including without limitation, volatile and non-volatile media, and removable and non-removable media such as firmware, physical and virtual storage, CD-ROMS, DVDs, and any other digital source such as a network or the Internet, as well as yet to be developed digital means, with the sole exception being transitory, propagating signal.

All documents mentioned and/or referred to in this patent application, in particular all patent documents and any Wikipedia articles, are hereby included by reference in their entirety.

Preferred embodiments of the present invention, in particular as described above, may be realized as detailed in the numbered embodiments and/or variants as laid down below, optionally in combination with one or more of the features and/or steps as detailed above:
1. A system for distributing voice messages, comprising:
   a) a plurality of computing devices connectable over a network, in particular the internet, comprising
      i) a plurality of client devices;
      ii) a central computing platform, in particular a server and/or a host; wherein
   b) said central computing platform is configured to:
      i) store user data related to each of a plurality of users, each user identified by a unique user ID, in particular with said user ID contained in the user data; wherein
         (1) for at least some users, the user data comprises content preference information related to a voice message content;
      ii) store a plurality of voice messages, wherein
         (1) each voice message has been created by a, in particular one, user;
      iii) store metadata related to and/or associated with each voice message, said metadata comprising
         (1) the user ID of said user;
         (2) a content identifier identifying and/or classifying a content of said voice message;
         (3) a language identifier identifying a language of the message;
      iv) select a subset of users based on content preference information;
      v) distribute one or more voice messages to the subset of users, wherein, in particular,
         (1) the one or more voice messages are selected such that their content identifier corresponds to or matches the content preference information, and/or
         (2) the one or more voice messages are sent to one or more client devices with each client device associated with at least one user from said subset of users;
         characterized in that
      vi) the or each voice message is anonymized prior to being distributed.
2. The system of embodiment 1, wherein at least some client devices comprise audio input capabilities for recording audio, in particular for recording voice messages; and/or at least some client devices comprise audio output capabilities for playing audio, in particular voice messages.
3. The system of any preceding embodiment, wherein
   a) the central computing platform is configured to receive voice messages over the network; and/or
   b) at least some client devices are configured to submit recorded voice messages, in particular voice messages created, authored, and/or selected by a user, to the central computing platform.
4. The system of the preceding embodiment, wherein the at least some client devices are configured or may be configured to anonymize at least some voice messages, in particular prior to being sent and/or submitted to the central computing platform.
5. The system of any preceding embodiment, wherein the user data related to each user comprises:
   a) status data related to the user; which may in particular relate to a degree of activity of the user, etc.;
   b) credit data, which may in particular be representative of a total amount of credit held by the user, a number of and/or length of voice messages the user is entitled to submit the central computing platform, etc.;
   c) rating data; which may in particular be based on ratings that voice messages created and/or authored by the user received;
   d) language proficiency data indicative which languages the users understands and/or speaks; and/or
   e) user permission data; wherein user permissions may be permanent or semi-permanent, variable, consumable, and/or may depend on and/or change with status data, credit data and/or rating data.
6. The system of any preceding embodiment, wherein the metadata related to each voice message comprises:
   a) rating data; which may in particular relate to ratings that each voice message received and/or a number of responses received;
   b) message permission data; wherein permissions may be variable and/or may depend on status data, credit data and/or rating data; and/or
   c) distribution preference data determined by the user who created the voice message.
7. The system of any preceding embodiment, further configured to create non-fungible tokens from at least some of the voice messages, in particular based on a selection from a plurality of voice messages created by a particular user made by said particular user, wherein, in particular, the user ID of said particular user is included in each non-fungible token.
8. The system of embodiment 7, configured to create non-fungible tokens from voice messages that have not been anonymized, in particular only from voice messages that have not been anonymized.
9. The system of embodiment 7 or 8, characterized in that at least some client devices are configured to establish a peer-to-peer network, wherein each client device may be a node of said network, and/or which peer-to-peer network may be configured to establish and manage a blockchain; and wherein, in particular,
   a) the non-fungible tokens are recorded on the said blockchain; and/or
   b) the blockchain is configured to store information regarding an ownership of the non-fungible tokens created from voice messages, in particular information regarding a transfer of ownership of such said non-fungible tokens.
10. A method for distributing voice messages, comprising the steps of:
   a) storing user data related to each of plurality of users on a central computing platform, in particular a host or a server, each user identified by a unique user ID, in particular with said user ID contained in the user data; wherein
      i) for at least some users, the user data comprises content preference information related to a voice message content;
   g) storing, on the central computing platform, a plurality of voice messages, wherein
      i) each voice message has been created by a, in particular one, user;
   h) storing, on the central computing platform, metadata related to and/or associated with each voice message, said metadata comprising
      i) the user ID of said user;
      ii) a content identifier identifying and/or classifying a content of said voice message;
      iii) a language identifier identifying a language of the message;
   i) selecting, in particular by the central computing platform, a subset of users based on content preference information;
   j) distributing, in particular by the central computing platform, voice messages to the subset of users over a network to which the central computing platform may be connected; characterized by the step of
   k) anonymizing at least one voice message, in particular all voice messages, prior to being distributed, in particular prior to being received by and/or being stored on the central computing platform.
11. The method of embodiment 10, further comprising
   a) recording at least one voice message using a client device, said client device being connectable to the central computing platform over a network, in particular the internet, in order to send recorded voice messages to the central computing platform;
   b) anonymizing at least some of the recorded voice messages before they are sent to the central computing platform.
12. The method of embodiment 10 or 11, further comprising creating non-fungible tokens from at least some of the voice messages, in particular based on a selection from a plurality of voice messages created by a particular user made by said particular user, wherein, in particular, the user ID of said particular user is included in each non-fungible token.
13. Computer program or computer program product for executing the method of one of embodiments 10 to 12, in particular with said computer program or computer program comprising instructions which, when the program is executed by a computer, in particular the central computing platform, cause the computer to carry out the method of one of embodiments 10 to 12.
14. A data processing system comprising means for carrying out the method of one of embodiments 10 to 12.
15. Client device, in particular for use with the method and/or system of preceding embodiments, with said client device, in particular:
   a) being connectable to a network, in particular the internet, and/or configured to connect to a central computing platform;
   b) comprising audio input capabilities for recording audio, in particular (spoken) voice messages;
   c) configured to submit and/or transmit data, in particular voice messages, to the central computing platform; and/or
   d) anonymize one or more recorded voice messages submission and/or transmission to the central computing platform.

## Claims

1. A system for distributing voice messages, comprising:
a) a plurality of computing devices connectable over a network, in particular the internet, comprising
i) a plurality of client devices;
ii) a central computing platform, in particular a server and/or a host; wherein
b) said central computing platform is configured to:
i) store user data related to each of a plurality of users, each user identified by a unique user ID, in particular with said user ID contained in the user data; wherein
(1) for at least some users, the user data comprises content preference information related to a voice message content;
ii) store a plurality of voice messages, wherein
(1) each voice message has been created by a, in particular one, user;
iii) store metadata related to and/or associated with each voice message, said metadata comprising
(1) the user ID of said user;
(2) a content identifier identifying and/or classifying a content of said voice message;
(3) a language identifier identifying a language of the message;
iv) select a subset of users based on content preference information;
v) distribute one or more voice messages to the subset of users, wherein, in particular,
(1) the one or more voice messages are selected such that their content identifier corresponds to or matches the content preference information, and/or
(2) the one or more voice messages are sent to one or more client devices with each client device associated with at least one user from said subset of users;
**characterized in that**
vi) the or each voice message is anonymized prior to being distributed.

2. The system of claim 1, wherein at least some client devices comprise audio input capabilities for recording audio, in particular for recording voice messages; and/or at least some client devices comprise audio output capabilities for playing audio, in particular voice messages.

3. The system of any preceding claim, wherein
a) the central computing platform is configured to receive voice messages over the network; and/or
b) at least some client devices are configured to submit recorded voice messages, in particular voice messages created, authored, and/or selected by a user, to the central computing platform.

4. The system of the preceding claim, wherein the at least some client devices are configured or may be configured to anonymize at least some voice messages, in particular prior to being sent and/or submitted to the central computing platform.

5. The system of any preceding claim, wherein the user data related to each user comprises:
a) status data related to the user; which may in particular relate to a degree of activity of the user, etc.;
b) credit data, which may in particular be representative of a total amount of credit held by the user, a number of and/or length of voice messages the user is entitled to submit the central computing platform, etc.;
c) rating data; which may in particular be based on ratings that voice messages created and/or authored by the user received;
d) language proficiency data indicative which languages the users understands and/or speaks; and/or
e) user permission data; wherein user permissions may be permanent or semi-permanent, variable, consumable, and/or may depend on and/or change with status data, credit data and/or rating data.

6. The system of any preceding claim, wherein the metadata related to each voice message comprises:
a) rating data; which may in particular relate to ratings that each voice message received and/or a number of responses received;
b) message permission data; wherein permissions may be variable and/or may depend on status data, credit data and/or rating data; and/or
c) distribution preference data determined by the user who created the voice message.

7. The system of any preceding claim, further configured to create non-fungible tokens from at least some of the voice messages, in particular based on a selection from a plurality of voice messages created by a particular user made by said particular user, wherein, in particular, the user ID of said particular user is included in each non-fungible token.

8. The system of claim 7, configured to create non-fungible tokens from voice messages that have not been anonymized, in particular only from voice messages that have not been anonymized.

9. The system of claim 7 or 8, **characterized in that** at least some client devices are configured to establish a peer-to-peer network, wherein each client device may be a node of said network, and/or which peer-to-peer network may be configured to establish and manage a blockchain; and wherein, in particular,
a) the non-fungible tokens are recorded on the said blockchain; and/or
b) the blockchain is configured to store information regarding an ownership of the non-fungible tokens created from voice messages, in particular information regarding a transfer of ownership of such said non-fungible tokens.

10. A method for distributing voice messages, comprising the steps of:
a) storing user data related to each of plurality of users on a central computing platform, in particular a host or a server, each user identified by a unique user ID, in particular with said user ID contained in the user data; wherein
i) for at least some users, the user data comprises content preference information related to a voice message content;
g) storing, on the central computing platform, a plurality of voice messages, wherein
i) each voice message has been created by a, in particular one, user;
h) storing, on the central computing platform, metadata related to and/or associated with each voice message, said metadata comprising
i) the user ID of said user;
ii) a content identifier identifying and/or classifying a content of said voice message;
iii) a language identifier identifying a language of the message;
i) selecting, in particular by the central computing platform, a subset of users based on content preference information;
j) distributing, in particular by the central computing platform, voice messages to the subset of users over a network to which the central computing platform may be connected; **characterized by** the step of
k) anonymizing at least one voice message, in particular all voice messages, prior to being distributed, in particular prior to being received by and/or being stored on the central computing platform.

11. The method of claim 10, further comprising
a) recording at least one voice message using a client device, said client device being connectable to the central computing platform over a network, in particular the internet, in order to send recorded voice messages to the central computing platform;
b) anonymizing at least some of the recorded voice messages before they are sent to the central computing platform.

12. The method of claim 10 or 11, further comprising creating non-fungible tokens from at least some of the voice messages, in particular based on a selection from a plurality of voice messages created by a particular user made by said particular user, wherein, in particular, the user **ID of** said particular user is included in each non-fungible token.

13. Computer program or computer program product for executing the method of one of claims 10 to 12, in particular with said computer program or computer program comprising instructions which, when the program is executed by a computer, in particular the central computing platform, cause the computer to carry out the method of one of claims 10 to 12.

14. A data processing system comprising means for carrying out the method of one of claims 10 to 12.

15. Client device, in particular for use with the method and/or system of preceding claims, with said client device, in particular:
a) being connectable to a network, in particular the internet, and/or configured to connect to a central computing platform;
b) comprising audio input capabilities for recording audio, in particular (spoken) voice messages;
c) configured to submit and/or transmit data, in particular voice messages, to the central computing platform; and/or
d) anonymize one or more recorded voice messages submission and/or transmission to the central computing platform.
